# FASCICULE DE BREVET EUROPEEN

(11) **EP 3 470 235 B1**
(45) Date de publication et mention de la délivrance du brevet: **25.08.2021**
(21) Numéro de dépôt: 18199426.0
(22) Date de dépôt: 09.10.2018
(51) Int. Cl.: B42D 25/324, B42D 25/351, B42D 25/342, B42D 25/373, G02B 3/00, G02B 3/06, G02B 27/60

(54) **COMPOSANT OPTIQUE DE SECURITE A EFFET REFLECTIF ET FABRICATION D'UN TEL COMPOSANT**
OPTISCHE SICHERHEITSKOMPONENTE MIT REFLEXIONSEFFEKT UND HERSTELLUNG EINER SOLCHEN KOMPONENTE
OPTICAL SECURITY COMPONENT WITH REFLECTIVE EFFECT AND MANUFACTURE OF SUCH A COMPONENT

(30) Priorité: 10.10.2017 FR 1759479
(43) Date de publication de la demande: 17.04.2019
(73) Titulaire: SURYS, 77600 Bussy-Saint-Georges (FR)
(72) Inventeur: Do Vale, Alexandre, 94140 Alfortville (FR)
(74) Mandataire: Osha Liang

(56) Documents cités:
- US-A1- 2014 367 957

## Description

### DOMAINE TECHNIQUE

La présente description concerne le domaine du marquage de sécurité. Plus particulièrement, elle se rapporte à un composant optique de sécurité visible en réflexion pour vérifier l'authenticité d'un document, à un procédé de fabrication d'un tel composant et à un document sécurisé équipé d'un tel document.

### ETAT DE L'ART

On connaît de nombreuses technologies pour l'authentification de documents ou de produits, et notamment pour la sécurisation de documents tels que des documents de valeur de type billets de banque, des passeports ou autres documents d'identification. Ces technologies visent à la production de composants optiques de sécurité dont les effets optiques en fonction des paramètres d'observation prennent des configurations caractéristiques et vérifiables. Le but général de ces composants optiques est de fournir des effets optiques nouveaux et différenciés, à partir de configurations physiques difficilement reproductibles.

Parmi ces composants, on connait des composants optiques pour l'authentification de documents ou produits, comprenant des matrices de microlentilles pour le grossissement de micro-images par effet de Moiré.

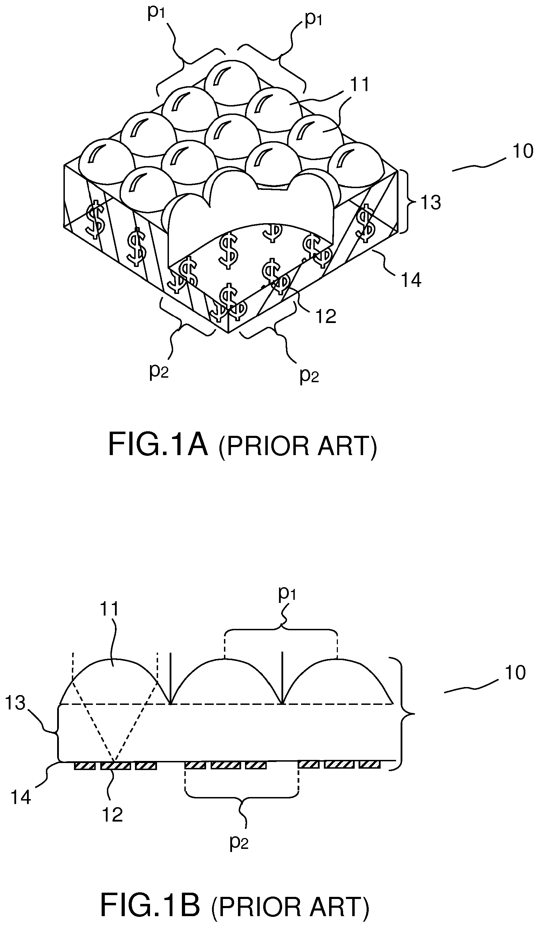

Les FIGS. 1A et 1B illustrent respectivement une vue en perspective et une vue en coupe d'un tel composant optique, décrit dans le brevet US 7738175.

Le composant optique 10 comprend un arrangement périodique selon deux directions (période p₁) d'éléments de micro-focalisation ou microlentilles 11, ces microlentilles définissant un plan focal 14. Le composant optique comprend par ailleurs un arrangement périodique correspondant de micro-images 12, également agencées selon deux directions (période p₂), les micro-images étant situées dans un plan proche du plan focal 14 des microlentilles, et séparé dans cet exemple du plan des microlentilles par un substrat 13 formant un séparateur optique. Comme expliqué par exemple dans l'article de M C Hutley et al. (« The Moiré magnifier », Pure Appl. Opt. 3 (1994) 133 - 142), un effet de grossissement des micro-images est visible par un observateur, lorsque le rapport des périodes diffère de 1, même très faiblement, ou lorsque les arrangements de microlentilles et de micro-images subissent une rotation l'un par rapport à l'autre. Ce grossissement est connu sous la terminologie de grossissement de Moiré.

Par ailleurs, lorsque le composant subit une rotation en tilt autour d'un axe parallèle à l'une des directions de l'agencement des éléments de focalisation, un observateur perçoit différentes portions des micro-images, entraînant notamment des effets visuels de déplacement des images.

Un tel arrangement à 3 couches (couche supérieure de microlentilles, séparateur optique, couche inférieure supportant les micro-images) présente cependant différents inconvénients. D'une part, le procédé de fabrication d'un tel composant nécessite un positionnement relatif très précis des microlentilles et des micro-images, ce qui peut entrainer des problèmes de reproductibilité et par là des doutes sur l'authenticité du composant de sécurité, lors de la fabrication en grand volume. D'autre part, l'épaisseur minimale du composant optique de sécurité résultant est de l'ordre de quelques dizaines de microns, ce qui est en soi une limitation dans le domaine des composants de sécurité : en effet un composant épais est plus facilement manipulable et donc réutilisable pour une falsification ; par ailleurs, de telles épaisseurs ne sont pas compatibles avec les composants de type DOVID (pour "Diffractive Optical Variable Image Device"), dans lesquels la couche structurée est beaucoup plus fine.

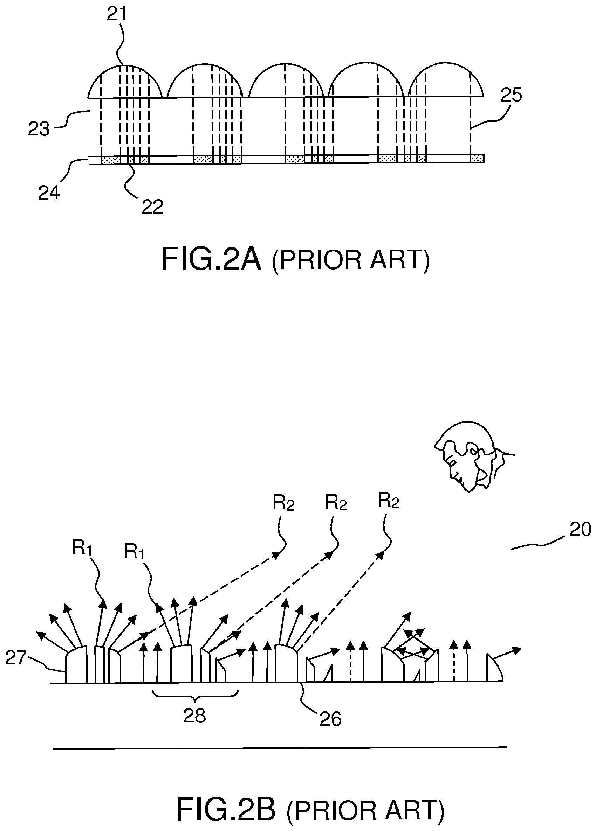

La demande de brevet publiée US 2014/0367957 décrit un composant optique de sécurité avec un effet de grossissement de Moiré, dans lequel l'arrangement traditionnel à 3 couches est remplacé par une couche structurée compatible des procédés de fabrication des composants de type DOVID. La FIG.2B reproduit un tel composant optique.

Le composant optique 20 représenté sur la FIG. 2B est conçu à partir d'un arrangement à 3 couches tel qu'illustré sur la FIG. 2A, et comprenant comme dans les FIGS 1A et 1B, un arrangement périodique de microlentilles 21, un arrangement périodique de micro-images 22, situées dans un plan proche du plan focal 24 des microlentilles au moyen d'un séparateur optique 23. En traçant des lignes de découpage imaginaires 25 qui s'étendent des extrémités des micro-images vers les microlentilles (FIG. 2A), et en retirant aux microlentilles 21 des «tranches» correspondant aux empreintes des micro-images 22, on obtient des éléments en relief 28 (FIG. 2B) caractéristiques des micro-images. Les éléments en relief 28 comprennent des microstructures 27 formées de « tronçons » de microlentilles et qui présentent de ce fait des surfaces externes courbes qui suivent le profil des microlentilles.

Comme illustré sur la FIG. 2B, les surfaces externes courbes des microstructures 27 réfléchissent la lumière incidente suivant les lois de la réflexion, dans toutes les directions (rayons R₁), tandis que les surfaces planes 26 entre les microstructures 27 ne réfléchissent la lumière incidence qu'en réflexion spéculaire. Du point de vue d'un observateur, chaque élément en relief 28 résultant de la structuration d'une microlentille selon l'empreinte d'une micro-image correspondante, présentera un point lumineux visible illustré par le rayon R₂ (rayon en pointillé réfléchi vers l'observateur) et correspondant à une portion de la micro image grossie par effet de Moiré. En appliquant un mouvement de tilt au composant optique 20, les points lumineux visibles par l'observateur proviendront d'autres régions des microstructures 27, ce qui entraînera la formation de nouvelles images pour l'observateur. Ainsi, les images obtenues par grossissement de Moiré pourront présenter, outre un effet de grandissement, des effets visuels dynamiques de mouvement et d'autres effets résultant des caractéristiques spécifiques des microlentilles, comme par exemple des effets de profondeur

Le composant optique décrit sur la FIG. 2B présente des effets comparables à ceux illustrés sur les FIGS 1A et 1B, avec notamment un grossissement de Moiré de micro-images et des effets visuels dynamiques lorsque le composant subit une rotation en tilt, mais a l'avantage notamment d'une meilleure reproductibilité lors de la fabrication, la matrice de micro-images se trouvant automatiquement positionnée par rapport à celle des microlentilles.

Cependant, les déposants ont montré qu'un tel composant optique de sécurité présente un effet inévitable d'inversion de contraste très fort à la réflexion spéculaire, qui nuit à la compréhension du mouvement pour un observateur.

US 2014/367957 A1 (illustré sur la FIG. 2B) ne décrit pas que les premières surfaces élémentaires sont nanostructurées de telle sorte à former au moins une première nanostructure, ladite première nanostructure étant diffusante ou formant un premier réseau mono ou bidimensionnel; et que les deuxièmes surfaces élémentaires ne sont pas nanostructurées ou sont nanostructurées de telle sorte à former au moins une deuxième nanostructure, différente de ladite première nanostructure, ladite deuxième nanostructure étant diffusante ou formant un deuxième réseau mono ou bidimensionnel.

La présente demande décrit un composant optique de sécurité avec une structure originale présentant, comme dans le composant illustré sur la FIG. 2B, des effets visuels de grossissements de Moiré de micro-images et qui soit compatible des procédés de fabrication des composants de type DOVID. Le composant optique de sécurité selon la présente demande permet en plus pour un observateur, lorsque le composant subit un mouvement de tilt, l'observation d'un mouvement ininterrompu sans « accident » de contraste à la réflexion spéculaire, et de ce fait, une plus grande facilité de contrôle et une authentification encore plus robuste.

### RESUME

Selon un premier aspect, l'invention concerne un composant optique de sécurité destiné à être observé en réflexion, à l'œil nu, selon au moins une première face d'observation, et comprenant :
- une première couche en matériau diélectrique, au moins partiellement transparente dans le visible, présentant un premier indice de réfraction,
- une deuxième couche réflective formant une interface réflective avec ladite première couche dans au moins une première région,
dans lequel :
- ladite interface réflective comprend au moins une première structure optique formant des premières surfaces élémentaires et des deuxièmes surfaces élémentaires, les contours desdites premières et deuxièmes surfaces élémentaires étant complémentaires en vue de dessus,
- les premières surfaces élémentaires sont nanostructurées de telle sorte à former au moins une première nanostructure, ladite première nanostructure étant diffusante ou formant un premier réseau mono ou bidimensionnel;
- les deuxièmes surfaces élémentaires ne sont pas nanostructurées ou sont nanostructurées de telle sorte à former au moins une deuxième nanostructure, différente de ladite première nanostructure, ladite deuxième nanostructure étant diffusante ou formant un deuxième réseau mono ou bidimensionnel ;
- les premières surfaces élémentaires et les deuxièmes surfaces élémentaires suivent le profil d'une matrice à une dimension de microlentilles cylindriques identiques entre elles, agencées périodiquement selon une première direction, avec une première période ;
- lesdites premières surfaces élémentaires ou lesdites deuxièmes surfaces élémentaires présentent des contours formant, en vue de dessus, des micro-images reconnaissables, agencées périodiquement selon une deuxième direction avec une deuxième période, le composant optique présentant en réflexion et sous l'effet d'un mouvement de tilt autour d'un axe perpendiculaire à ladite première direction, un grossissement et un déplacement desdites premières micro-images par grossissement de Moiré.

Une couche « au moins partiellement transparente dans le visible» est définie, au sens de la présente description, comme une couche présentant une transmission d'au moins 70%, de préférence au moins 80%, dans au moins une sous-bande spectrale du visible.

Un tel composant optique de sécurité présente, en réflexion et sous l'effet d'un mouvement de tilt autour d'un axe perpendiculaire à ladite première direction, un grossissement des micro-images par grossissement de Moiré et un effet de mouvement ininterrompu des images agrandies, c'est-à-dire sans « accident » de contraste à la réflexion spéculaire, cet effet résultant des courbures non nulles des premières et deuxièmes surfaces élémentaires qui se distinguent les unes des autres grâce à la nano structuration spécifique des premières surfaces élémentaires.

Dans le cas par exemple où les premières surfaces élémentaires sont nanostructurées de telle sorte à former un premier réseau mono ou bidimensionnel, on pourra observer en outre des images colorées et/ou des images sur fond coloré du fait des effets de diffraction.

Selon un ou plusieurs exemples de réalisation, la période dudit réseau est comprise entre 100 nm et 700 nm, le réseau étant déterminé pour produire, après dépôt de la deuxième couche réflective, un filtre résonant dans au moins une première bande spectrale. Un tel réseau est dénommé « réseau sub longueur d'onde » dans la suite de la description.

Selon un ou plusieurs exemples de réalisation, ladite deuxième couche réflective est une couche métallique et ledit premier réseau, sub longueur d'onde, est adapté pour former des résonances plasmoniques dans ladite première bande spectrale. Des effets visuels colorés liés aux résonances plasmoniques pourront être observés en réflexion dans le cas d'une couche métallique suffisamment épaisse, et en transmission, dans le cas d'une couche métallique suffisamment fine et avec une encapsulation de la couche métallique entre deux couches en matériau diélectrique.

Selon un ou plusieurs exemples de réalisation, le composant présente en outre une troisième couche d'encapsulation, et ladite deuxième couche réflective est une couche en matériau diélectrique, présentant un indice de réfraction différent de celui desdites première et troisième couches diélectriques. Ledit premier réseau sub longueur d'onde est alors adapté pour former des résonances de type guide d'onde dans ladite première bande spectrale. Selon un ou plusieurs exemples de réalisation, la différence des valeurs d'indice de réfraction est au moins égale à 0,3, avantageusement au moins égale à 0,5.

Dans le cas où lesdites premières surfaces élémentaires sont nanostructurées de telle sorte à former au moins une première nano structure diffusante, on obtient également un effet de mouvement des images agrandies ininterrompu sous l'effet d'un mouvement de tilt du composant, les images pouvant apparaître par exemple sur un fond de « blanc diffus », c'est-à-dire un blanc visible quel que soit l'angle azimutal d'observation.

Par nanostructure diffusante, on comprend au sens de la présente description un microrelief formé de pics et/ou de vallées positionnés de manière aléatoire, la hauteur des pics et la profondeur des vallées étant chacune sensiblement inférieures à 1 µm. Selon un ou plusieurs exemples de réalisation, la hauteur des pics et la profondeur des vallées est chacune comprises entre 50 et 200 nm, de préférence comprises entre 100 et 160 nm, par exemple environ 130 nm. Selon un ou plusieurs exemples de réalisation, la hauteur des pics et la profondeur des vallées sont encore dans ces plages de valeurs, mais distinctes l'une de l'autre. L'efficacité du caractère dispersif de la nanostructure diffusante est dépendante de la densité et de la taille des pics et des vallées, qui peuvent être fixées par l'homme du métier selon le produit souhaité.

Par mouvement de tilt, on entend une rotation du composant autour d'un axe perpendiculaire à ladite première direction (ou parallèle à la génératrice des cylindres formant lesdites premières lentilles cylindriques). L'angle de tilt est par exemple de +/- 45°, de préférence +/- 30° autour d'une position nominale d'observation. La position nominale d'observation est définie par exemple pour une observation sous éclairage vertical, par un composant incliné de telle sorte à présenter un angle donné entre la normale au composant et la direction verticale, par exemple un angle compris entre 30 degrés et 45 degrés au sens large.

Les microlentilles cylindriques sont définies par des tronçons de cylindres au sens large, c'est-à-dire des formes obtenues en faisant translater une courbe selon une génératrice. La génératrice des cylindres est perpendiculaire à ladite première direction d'agencement des microlentilles cylindriques. La courbe peut être une portion de cercle, de parabole, ou de toute autre forme.

Les microlentilles cylindriques sont soit toutes concaves, vue de ladite première face d'observation, soit toutes convexes, vue de ladite première face d'observation.

Par rapport à des microlentilles sphériques, les microlentilles cylindriques sont plus lumineuses en réflexion ; par ailleurs, en observation sous une source étendue, les lentilles cylindriques permettent de réduire l'effet flou caractéristique des lentilles sphériques qui renvoient chacune une image différente vers l'œil de l'observateur / vers le dispositif de capture d'image. Avec un seul axe de tilt efficace, la stabilité de l'image observée est ainsi améliorée quelle que soit la source d'éclairage et l'authentification du composant optique de sécurité plus facile pour un observateur.

Selon un ou plusieurs exemples de réalisation, lesdites deuxièmes surfaces élémentaires sont nanostructurées de telle sorte à former un deuxième réseau mono ou bidimensionnel, par exemple un réseau sub longueur d'onde.

Selon un ou plusieurs exemples de réalisation, dans le cas où les premières surfaces élémentaires sont nanostructurées pour former un premier réseau mono ou bidimensionnel, ledit deuxième réseau est différent dudit premier réseau. Dans ce cas, la période du deuxième réseau et/ou son orientation azimutale est différente respectivement de la période du premier réseau et/ou de son orientation azimutale. Dans le cas de premier et deuxième réseaux sub longueur d'onde, la deuxième bande spectrale du filtre résonant formé par le deuxième réseau pourra être différente de la première bande spectrale du filtre résonant formé par le premier réseau.

On observe alors des images colorées sur fond coloré, avec des variations de couleur entre les images et le fond. On peut observer un « décalage spectral » entre les images et le fond si les réseaux diffèrent du fait de leur période, c'est-à-dire que la longueur d'onde dominante sous un angle d'observation n'est pas la même pour les réseaux appliqués respectivement sur le fond et sur les micro-images, et que l'irisation observée varie dans le même sens pour un mouvement de tilt donné. Dans le cas de réseaux sub longueurs d'onde, des variations de couleur par rotation azimutale du composant sont également observées lorsque les premier et deuxième réseaux diffèrent du fait de leur orientation azimutale.

Selon un ou plusieurs exemples de réalisation, la profondeur de modulation du premier réseau (ou des premier et deuxième réseaux) mono ou bidimensionnel(s), définie dans une direction perpendiculaire au plan du composant, est comprise entre 50 nm et 500 nm, de préférence entre 50 nm et 300 nm.

Selon un ou plusieurs exemples de réalisation, lesdites premières surfaces élémentaires sont nanostructurées de telle sorte à former une première nanostructure diffusante et lesdites deuxièmes surfaces élémentaires sont nanostructurées de telle sorte à former un réseau mono ou bidimensionnel, par exemple un réseau sub longueur d'onde.

Selon un ou plusieurs exemples de réalisation, lesdites deuxièmes surfaces élémentaires sont nanostructurées de telle sorte à former une deuxième nanostructure diffusante.

Selon un ou plusieurs exemples de réalisation, lorsque lesdites premières surfaces élémentaires sont nanostructurées de telle sorte à former une première nanostructure diffusante, la deuxième nanostructure diffusante est alors différente de la première nanostructure diffusante ; par exemple la hauteur des pics et/ou la profondeur des vallées et/ou la densité des pics et/ou des vallées est différente.

Selon un ou plusieurs exemples de réalisation, lesdites premières surfaces élémentaires sont nanostructurées de telle sorte à former un réseau mono ou bidimensionnel, par exemple un réseau sub longueur d'onde, et lesdites deuxièmes surfaces élémentaires sont nanostructurées de telle sorte à former une nanostructure diffusante.

Selon un ou plusieurs exemples de réalisation, ladite deuxième couche réflective est une couche métallique ; ladite deuxième couche est par exemple formée en Aluminium, Cuivre, Chrome, Argent ou un alliage de ces métaux.

Selon un ou plusieurs exemples de réalisation, ladite deuxième couche réflective est une couche en matériau diélectrique, présentant un indice de réfraction différent de celui des couches avoisinantes. Selon un ou plusieurs exemples de réalisation, la différence des valeurs d'indice de réfraction est au moins égale à 0,3, avantageusement au moins égale à 0,5.

Selon un ou plusieurs exemples de réalisation, le composant présente en outre une troisième couche d'encapsulation en matériau diélectrique, ladite deuxième couche réflective étant encapsulée entre lesdites première et troisième couches.

Dans un composant optique de sécurité selon la présente description, l'effet de grossissement de Moiré n'apparaît que selon ladite première direction d'agencement des microlentilles, du fait de l'utilisation de microlentilles cylindriques. Dans la direction perpendiculaire à ladite première direction d'agencement des microlentilles (direction parallèle à la génératrice des cylindres), il n'y a pas de déformation des micro-images.

Les micro-images peuvent comprendre, de façon non limitative, des caractères alphanumériques, des éléments géométriques simples ou complexes, des éléments graphiques. En pratique, du fait du grossissement sélectif selon un seul axe, elles sont conçues au niveau du composant optique de sécurité de façon déformée, de telle sorte à apparaître non déformées pour un observateur, après effet de grossissement de Moiré.

Selon un ou plusieurs exemples de réalisation, la première direction d'agencement des microlentilles cylindriques et la deuxième direction d'agencement des micro-images sont colinéaires ; dans ce cas, lesdites première et deuxième périodes sont différentes pour assurer l'effet de grossissement de Moiré.

Selon un ou plusieurs exemples de réalisation, ladite première période d'agencement des microlentilles est comprise entre 10 µm et 300 µm, avantageusement entre 20 µm et 150 µm, et ladite deuxième période d'agencement des micro-images est égale à ladite première période plus ou moins un pourcentage de ladite première période, le pourcentage étant compris entre 0,1% et 10%, avantageusement entre 0,1% et 5%.

Selon un ou plusieurs exemples de réalisation, la première direction d'agencement des microlentilles cylindriques et la deuxième direction d'agencement des micro-images forment un angle non nul, par exemple un angle compris entre 0,1 degrés et 5 degrés, avantageusement entre 0,1 degrés et 3 degrés. Dans ce cas, les première et deuxième périodes peuvent être identiques, par exemple comprises entre 10 µm et 300 µm, ou différentes.

Selon un ou plusieurs exemples de réalisation, une largeur maximale des microlentilles cylindriques, mesurée selon ladite première direction d'agencement, est inférieure à 300 µm; cela permet que les microlentilles ne soient pas individuellement visibles à l'oeil nu.

Selon un ou plusieurs exemples de réalisation, le nombre minimal de microlentilles cylindriques est déterminé en fonction de la largeur maximale des microlentilles cylindriques, de telle sorte que l'effet visuel résultant soit visible à l'oeil nu. Ainsi, selon un ou plusieurs exemples de réalisation, une dimension minimale de la première structure selon ladite première direction d'agencement des microlentilles pourra être supérieure à 1 mm, de préférence supérieure à 2 mm, de préférence supérieure à 5 mm.

Selon un ou plusieurs exemples de réalisation, une longueur minimale desdites microlentilles cylindriques selon la direction perpendiculaire à ladite première direction d'agencement des microlentilles (direction parallèle à la génératrice) est déterminée de telle sorte à être visible à l'oeil nu. Ainsi, selon un ou plusieurs exemples de réalisation, une longueur minimale desdites microlentilles cylindriques selon la direction perpendiculaire à ladite première direction d'agencement des microlentilles est supérieure à 1 mm, de préférence supérieure à 2 mm, de préférence supérieure à 5 mm.

Selon un ou plusieurs exemples de réalisation, la hauteur de ladite première structure, définie dans une direction perpendiculaire au plan du composant, est comprise entre 2 µm et 20 µm, de préférence entre 3 µm et 10 µm.

Le composant optique de sécurité selon le premier aspect peut comprendre une ou plusieurs couche(s) additionnelle(s) en fonction des besoins de l'application, sans que cette ou ces couche(s) additionnelle(s) ne contribuent à l'effet visuel recherché.

Ainsi, selon un ou plusieurs exemples de réalisation, le composant optique de sécurité est adapté à la sécurisation d'un document ou d'un produit, et comprend en outre, sur la face opposée à la face d'observation, une couche adaptée pour le transfert du composant sur le document ou le produit, par exemple une couche d'adhésif permanent ou une couche d'adhésif ré-activable.

Selon un ou plusieurs exemples de réalisation, le composant optique de sécurité comprend en outre, du côté de la première face d'observation, un film support destiné à être détaché après transfert du composant sur le document ou le produit.

Selon un ou plusieurs exemples de réalisation, le composant optique de sécurité comprend du côté de la première face d'observation et/ou sur la face opposée à la première face d'observation, une ou plusieurs couches de protection.

Selon un ou plusieurs exemples de réalisation, la ou lesdites plusieurs couches de protection sont au moins partiellement transparentes dans le visible, permettant en outre une observation du composant optique de sécurité selon une deuxième face d'observation, opposée à ladite première face d'observation.

Un tel composant optique de sécurité est adapté par exemple à la fabrication d'un fil de sécurité pour la sécurisation des billets de banque, cartes de paiement et autres documents de sécurité.

Selon un deuxième aspect, la présente description concerne des procédés de fabrication de composants optiques de sécurité selon le premier aspect.

Selon un ou plusieurs exemples de réalisation, le procédé de fabrication comprend :
- le dépôt sur un film support de ladite première couche en matériau diélectrique ;
- la formation par réplication sur ladite première couche de ladite au moins première structure ;
- le dépôt sur ladite première couche en matériau diélectrique structurée d'une couche réflective pour former ladite interface réflective.

### BREVE DESCRIPTION DES FIGURES

D'autres caractéristiques et avantages de l'invention apparaîtront à la lecture de la description qui suit, illustrée par les figures suivantes :
- FIGS. 1A et 1B, déjà décrites, des exemples de composants optiques de sécurité avec grossissement de micro-images par grossissement de Moiré, selon l'état de l'art ;
- FIGS. 2A et 2B, déjà décrites, d'autres exemples de composants optiques de sécurité avec grossissement de micro-images par grossissement de Moiré, selon l'état de l'art ;
- FIGS. 3A et 3B, des vues en coupe d'exemples de réalisation de composants selon la présente description ;
- FIGS. 4A et 4B, des schémas illustrant, selon des vues de coupe, différents exemples de l'interface entre la première couche en matériau diélectrique et la deuxième couche réfléchissante, dans un composant optique selon la présente description;
- FIGS. 5A et 5B, des schémas illustrant, selon des vues de dessus, des exemples de matrices de microlentilles cylindriques et de micro-images, dans le cas où les micro-images sont agencées dans la même direction et avec une période différente de celle des microlentilles (5A) et dans le cas où les micro-images sont agencées dans une direction faisant un angle non nul avec la direction d'agencement des microlentilles (5B) ;
- FIG. 6, des schémas illustrant des effets visuels comparatifs entre un composant optique de sécurité selon l'état de l'art et des exemples de composants optiques de sécurité selon la présente description.

### DESCRIPTION DETAILLEE

Sur les figures, les éléments ne sont pas représentés à l'échelle pour une meilleure visibilité.

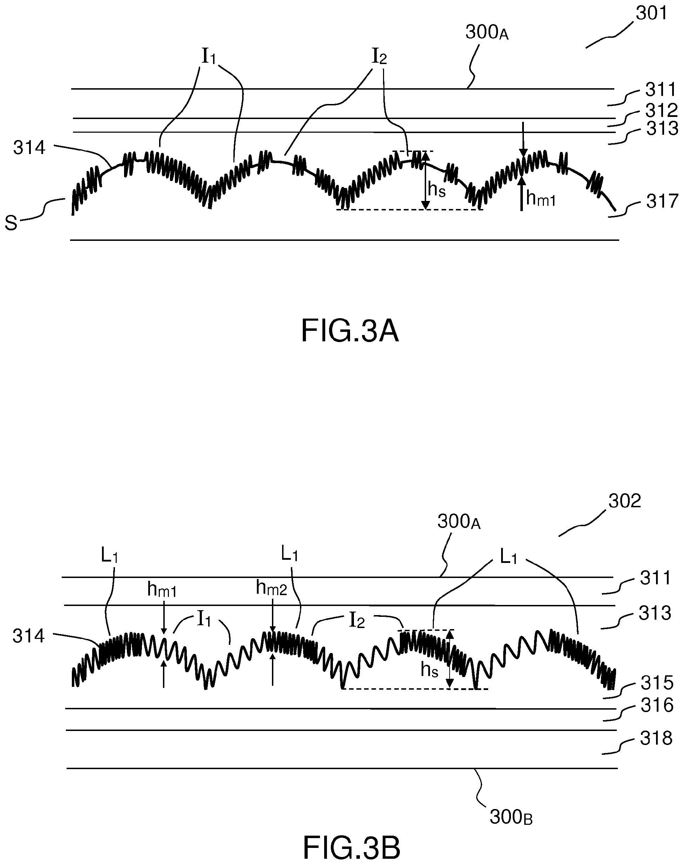

Les FIGS. 3A et 3B représentent selon des vues en coupe (partielles) deux exemples de composants optiques de sécurité selon la présente description.

Le composant optique de sécurité 301 représenté sur la FIG. 3A représente par exemple un composant optique de sécurité destiné par exemple à être transféré sur un document ou un produit en vue de sa sécurisation. Il comprend selon cet exemple un film support 311, par exemple un film en matériau polymère, par exemple un film en polyéthylène téréphtalate (PET) de quelques dizaines de micromètres, typiquement 15 à 100 µm, ainsi qu'une couche de détachement 312, par exemple en cire naturelle ou synthétique. La couche de détachement permet de retirer le film support en polymère 311 après transfert du composant optique sur le produit ou document à sécuriser. Le composant optique de sécurité 301 comprend par ailleurs une première couche 313 en matériau diélectrique, présentant un premier indice de réfraction n₁ et une deuxième couche réflective 314 formant avec la première couche 313 en matériau diélectrique, une interface réflective. Ladite interface réflective forme dans au moins une première région, une première structure S, dont la hauteur selon une direction perpendiculaire au plan du composant est référencée h_{S}, et qui présente des surfaces élémentaires I₁, I₂ qui seront décrites plus en détails par la suite. Dans cet exemple, seules les premières surfaces élémentaires I₁ sont nanostructurées pour former des surfaces diffusantes ou des réseaux, par exemple des réseaux sub longueurs d'onde de profondeur hₘ₁, comme cela sera décrit plus en détails par la suite.

La deuxième couche 314 est par exemple une couche métallique, par exemple une couche en Aluminium, Cuivre, Chrome, Argent ou un alliage de ces métaux, et son épaisseur est par exemple comprise entre 20 nm et 80 nm.

La deuxième couche 314 peut être également une couche dite de variation d'indice, présentant un indice de réfraction différent de celui des couches avoisinantes, la différence d'indice entre les couches 313 et 314 présentant une valeur au moins égale à 0,3, de préférence égale à 0,5. Des matériaux pour des couches de variation d'indice sont par exemple décrits dans le brevet US 4856857 par exemple, la deuxième couche 314 est une couche en TiO₂ ou en ZnS, d'épaisseur comprise entre 40 et 150 nm.

La couche 314 permet d'assurer la réflexion de la lumière incidente.

Le composant optique de sécurité comprend par ailleurs une ou plusieurs couches non fonctionnelles optiquement mais adaptées à l'application, par exemple, dans l'exemple de la FIG. 3A, une couche d'adhésif 317, par exemple une couche d'adhésif ré-activable à chaud, pour le transfert du composant optique de sécurité sur le produit ou document.

En pratique, comme cela sera détaillé par la suite, le composant optique de sécurité peut être fabriqué en empilant les couches 312 et 313 sur le film support 311, puis la couche 313 est structurée pour former ladite première structure S et recouverte par la couche réflective 314 pour former l'interface réflective. La couche d'adhésif 317 est ensuite déposée. Le composant peut alors être transféré sur un document/produit à sécuriser grâce à la couche 317. Optionnellement, le film support 311 peut être détaché, par exemple au moyen de la couche de détachement 312. La face principale d'observation 300_{A} du composant optique de sécurité se trouve ainsi du côté de la face de la première couche 313 opposée à l'interface avec la couche réflective 314. La structure est ainsi encapsulée, donc protégée contre les dégradations naturelles (type salissure) ou contre les attaques d'un contrefacteur.

Le composant optique de sécurité 302 représenté sur la FIG. 3B représente par exemple un composant optique de sécurité destiné par exemple à la sécurisation de billets de banque, cartes de paiement ou autre documents fiduciaires ; il s'agit par exemple d'une partie d'un fil de sécurité destiné à être intégré dans le papier pendant la fabrication du billet. Dans cet exemple, le composant 302 comprend comme précédemment un film support 311 (10 à 40 µm) qui pourra servir également de film de protection au fil de sécurité, et, comme dans l'exemple de la FIG. 3A, une première couche 313 en matériau diélectrique présentant un premier indice de réfraction n₁, et une deuxième couche réflective 314 formant avec la première couche 313 en matériau diélectrique une interface réflective formant la première structure S avec les premières et deuxièmes surfaces élémentaires I₁, I₂. Dans cet exemple, à la fois les premières et les deuxièmes surfaces élémentaires sont nanostructurées pour former des surfaces diffusantes ou des réseaux, par exemple des réseaux sub longueurs d'onde de profondeurs hₘ₁ et hₘ₂ respectivement, comme cela sera décrit plus en détails par la suite.

Le composant optique de sécurité 302 comprend par ailleurs, dans l'exemple de la FIG. 3B, un ensemble des couches 315, 316, 318, respectivement une couche d'encapsulation 315, une couche de contraste colorée 316 facultative, qui peut être opaque et/ou discontinue, et une couche de protection 318, par exemple un deuxième film polymère ou un vernis. Comme dans l'exemple précédent, la fabrication peut être réalisée par empilement des couches sur le film support 311. La couche de protection 318 est ensuite déposée pour donner au fil de sécurité la résistance physico-chimique nécessaire. Les couches d'encapsulation 315 et de contraste colorée 316 sont optionnelles ; elles peuvent également ne former qu'une seule couche. La couche de protection 318 et la couche d'encapsulation 315 peuvent également ne former qu'une seule et même couche présentant les deux fonctions.

Il apparaitra à l'homme du métier que d'autres couches non fonctionnelles optiquement peuvent être ajoutées en fonction des besoins de l'application dans chacun des exemples représentés sur les FIGS. 3A et 3B et que les variantes de réalisation présentées sur les FIGS. 3A et 3B peuvent être combinées ; notamment, les interfaces réflectives représentées sur les FIGS. 3A et 3B sont aussi bien adaptées à un composant optique de sécurité destiné à être transféré sur un document ou un produit en vue de sa sécurisation qu'à un composant optique de sécurité destiné à la sécurisation intrinsèque du papier de billets de banque.

A noter que si les couches additionnelles, non fonctionnelles optiquement, par exemple la couche 317, ou les couches 315, 316, 318, sont au moins partiellement transparentes dans le visible, ainsi que le support de destination, le composant optique de sécurité pourra être observé non seulement selon la première face d'observation 300_{A} (recto) mais aussi selon une deuxième face d'observation 300_{B}, opposée à ladite première face d'observation (verso). Selon l'observation recto ou verso, une inversion des courbures des surfaces élémentaires formant l'interface réflective permettra une observation différenciée caractérisée notamment par une inversion des effets de mouvement.

Un tel composant optique de sécurité est par exemple adapté à la sécurisation d'un document de sécurité de type billet de banque ou carte, comprenant une fenêtre de transparence pour une observation recto/verso.

Par ailleurs, dans un composant optique de sécurité tel que représenté par exemple sur l'une ou l'autre des figures 3A et 3B, l'interface réflective peut présenter au moins une deuxième structure (non représentée sur les FIGS. 3A, 3B), permettant de juxtaposer ou d'imbriquer différents effets résultant de structures telles que décrites dans la présente demande ou d'autres effets visuels, par exemple de type DOVID.

Dans un composant optique de sécurité selon la présente description, la deuxième couche réflective 314 peut également être interrompue, par exemple au moyen de démétallisation partielles, formant alors différentes régions, chaque région pouvant comprendre une ou plusieurs structures. Les différentes régions peuvent former des motifs juxtaposés ou imbriqués.

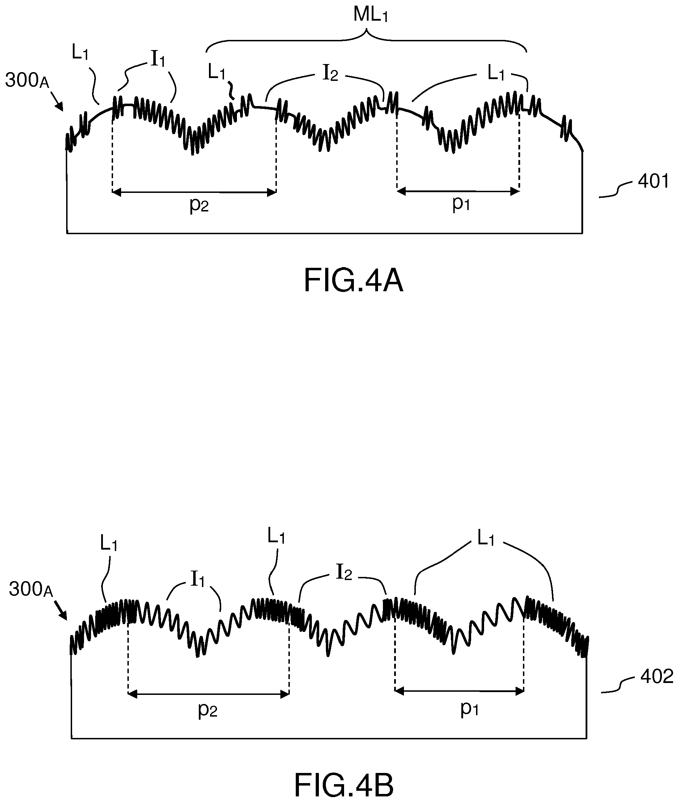

Les FIGS. 4A et 4B représentent schématiquement et selon des vues de coupe, des exemples 401 - 402 de l'interface réflective entre la première couche en matériau diélectrique 313 et la deuxième couche réfléchissante 314, dans un composant optique selon la présente description. Dans ces exemples, on a indiqué par une flèche 300_{A} la position d'une première face d'observation, sachant que comme expliqué précédemment, il est possible dans certains exemples de réalisation d'observer le composant optique de sécurité selon les deux côtés recto et verso.

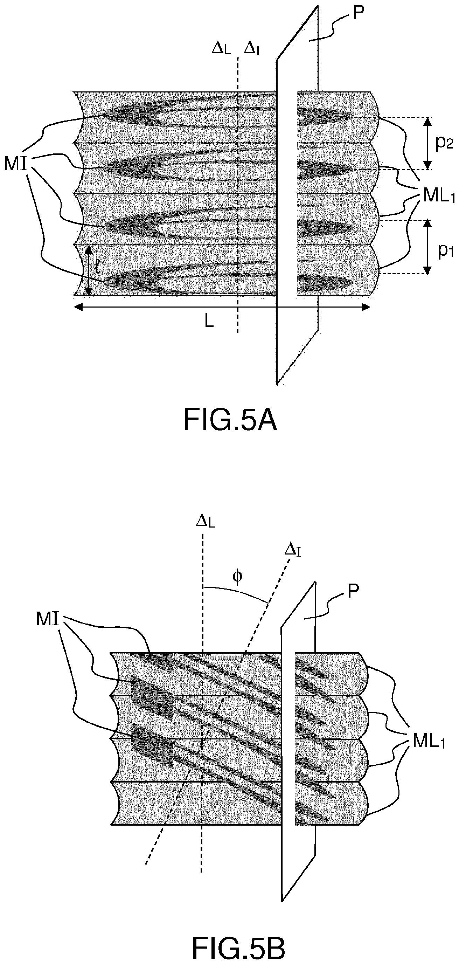

Les FIGS. 5A et 5B représentent schématiquement et selon des vues de dessus, deux exemples d'interfaces réflectives d'un composant optique de sécurité selon la présente description. Le plan P schématise un plan de coupe pour la représentation des interfaces en vue de coupe telles qu'illustrées sur les FIGS 4A et 4B. La face observée sur les FIGS. 5A et 5B est la première face d'observation 300_{A} représentée sur les FIGS. 4A et 4B.

Comme illustré sur les FIGS. 4A et 4B, l'interface réflective est formée de premières surfaces élémentaires I₁ et de deuxièmes surfaces élémentaires I₂ dont les contours, en vue de dessus, sont complémentaires.

Selon la présente description, au moins les premières surfaces élémentaires I₁ sont nanostructurées de telle sorte à former au moins une première nanostructure diffusante ou au moins un premier réseau mono ou bidimensionnel. Sur les vues en coupe des FIGS. 4A et 4B, une nano structuration a été schématisée qui peut être comprise soit comme une nanostructure diffusante, soit comme un réseau mono ou bidimensionnel.

Les premières surfaces élémentaires I₁ et les deuxièmes surfaces élémentaires I₂ suivent le profil d'une matrice ML₁ à une dimension de microlentilles cylindriques identiques L₁ identiques entre elles, lesdites surfaces courbes L₁ étant agencées périodiquement selon une première direction Δ_{L} (FIG. 5A, 5B), avec une première période p₁.

Comme illustré sur la FIG. 4B, les deuxièmes surfaces élémentaires I₂ peuvent également être nanostructurées.

La nano-structuration des premières surfaces élémentaires I₁ et éventuellement des deuxièmes surfaces élémentaires I₂ permet de délimiter les micro-images par rapport à un fond, comme cela sera décrit plus en détails par la suite.

Par exemple, les premières surfaces élémentaires (et éventuellement les deuxièmes surfaces élémentaires) peuvent être nanostructurées de telle sorte à former un réseau mono ou bidimensionnel, de période comprise entre 100 nm et 700 nm, avantageusement entre 200 nm et 500 nm, et de profondeur de modulation hₘ avantageusement compris entre 50 nm et 300 nm. Un tel réseau dit « sub longueur d'onde », est déterminé pour produire, après dépôt de la deuxième couche réflective, un filtre résonant dans une première bande spectrale.

Par exemple, la deuxième couche réflective 314 est métallique, adaptée pour former des résonances plasmoniques à l'interface entre ladite première couche en matériau diélectrique et ladite deuxième couche métallique. La couche métallique est suffisamment épaisse et des effets visuels colorés sont visibles en réflexion. De telles résonances plasmoniques sont décrites par exemple dans la demande de brevet FR 2982038 au nom de la déposante.

Selon un autre exemple, la deuxième couche réflective 314 est métallique, fine, et encapsulée entre deux couches en matériau diélectrique 313, 315, de telle sorte à former des résonances plasmoniques aux interfaces métal/diélectrique. Des effets visuels colorés sont visibles en transmission. De telles résonances plasmoniques sont décrites par exemple dans la demande de brevet FR 2973917 au nom de la déposante.

Selon un autre exemple, le composant optique de sécurité comprend en outre une troisième couche 315 d'encapsulation en matériau diélectrique, et la deuxième couche réflective 314 est une couche en matériau diélectrique, agencée entre lesdites première et troisième couches en matériau diélectrique, présentant un indice de réfraction différent de celui desdites première et troisième couches en matériau diélectrique, adaptée pour former des résonances de type guide d'onde dans ladite première bande spectrale. Les différences entre les valeurs d'indice de réfraction de ladite deuxième couche en matériau diélectrique et desdites première et troisième couches avoisinantes sont au moins égales à 0,3, avantageusement au moins égales à 0,5. De telles résonances de type guide d'onde sont décrites par exemple dans la demande de brevet US 4484797.

Dans tous les cas, une nano structuration des premières surfaces élémentaires de l'interface sous forme d'un réseau mono ou bidimensionnel permet de former un effet de fond et/ou d'image colorée avec un contraste qui n'est pas modifié sur une plage angulaire suffisamment large, par exemple +/- 30° par rapport à une position nominale d'observation, comme cela sera décrit par la suite.

Lorsqu'à la fois les premières surfaces élémentaires et les deuxièmes surfaces élémentaires sont nanostructurées pour former respectivement un premier réseau sub et un deuxième réseau (cas de la FIG. 4B par exemple), les réseaux pourront être choisis différents (soit du fait de leur période, soit du fait de leur orientation azimutale).

Selon un autre exemple de réalisation (non représentée sur les figures), les premières surfaces élémentaires (et éventuellement les deuxièmes surfaces élémentaires) sont nanostructurées pour former une nanostructure diffusante, c'est-à-dire un microrelief formé de pics et/ou de vallées positionnés de manière aléatoire, la hauteur des pics et la profondeur des vallées étant chacune sensiblement inférieures à 1 µm. Selon un ou plusieurs exemple de réalisation, la hauteur des pics et la profondeur des vallées est chacune comprises entre 50 et 200 nm, de préférence comprises entre 100 et 160 nm, par exemple environ 130 nm. Selon un ou plusieurs exemple de réalisation, la hauteur des pics et la profondeur des vallées sont encore dans ces plages de valeurs, mais distinctes l'une de l'autre. L'efficacité du caractère dispersif de la nanostructure diffusante est dépendante de la densité et de la taille des pics et des vallées, qui peuvent être fixées par l'homme du métier selon le produit souhaité.

Ainsi, lorsqu'à la fois les premières surfaces élémentaires et les deuxièmes surfaces élémentaires sont nanostructurées pour former respectivement une première nanostructure diffusante et une deuxième nanostructure diffusante, les première et deuxième nanostructures diffusantes pourront être différentes, par exemple du fait de la densité des pics et/ou vallées et/ou de la hauteur des pics et/ou de la profondeur des vallées, de telle sorte à présenter des lobes de diffusion différents.

Il est également possible de prévoir les cas où les premières surfaces élémentaires sont nanostructurées pour former une nanostructure diffusante et les deuxièmes surfaces élémentaires sont nanostructurées pour former un réseau, ou les premières surfaces élémentaires sont nanostructurées pour former un réseau et les deuxièmes surfaces élémentaires sont nanostructurées pour former une nanostructure diffusante. Dans ce cas, on pourra observer, toujours sur une plage angulaire suffisamment large, des images colorées sur fond blanc diffus ou inversement.

Comme illustré sur les FIGS. 4A et 4B, les premières surfaces élémentaires I₁ et les deuxièmes surfaces élémentaires I₂ suivent le profil d'une matrice ML₁ de microlentilles cylindriques identiques L₁.

Dans l'exemple des FTGS. 4A et 4B, les microlentilles cylindriques sont convexes vues de la première face d'observation 300_{A}; Bien entendu, les microlentilles cylindriques peuvent également être concaves vues de la première face d'observation, dans chacun des exemples illustrés.

En pratique, les microlentilles cylindriques L₁ sont par exemple des tronçons de cylindres obtenus en faisant translater une courbe selon une génératrice. La génératrice des cylindres est perpendiculaire à ladite première direction d'agencement des microlentilles cylindriques. La courbe peut être par exemple de forme circulaire, parabolique, ou quelconque.

Une dimension L des microlentilles cylindriques (figure 5A), mesurée dans une direction parallèle à la génératrice des cylindres (et donc non déformée par mouvement de tilt du composant optique de sécurité), est par exemple supérieure à 1 mm, avantageusement supérieure à 2 mm, avantageusement supérieure à 5 mm, pour former des effets visuels visibles à l'oeil nu.

Une largeur λ des microlentilles cylindriques, mesurée dans une direction perpendiculaire à la génératrice des cylindres (et donc déformée par mouvement de tilt du composant optique de sécurité), est avantageusement inférieure à 300 µm, pour ne pas être visible à l'oeil nu. Par contre, un nombre suffisant de microlentilles cylindriques peut être prévu pour que la dimension totale de la première structure, mesurée dans une direction parallèle à la première direction Δ_{L} d'agencement des microlentilles cylindriques soit supérieure à 1 mm, avantageusement supérieure à 2 mm, avantageusement supérieure à 5 mm, pour former des effets visuels visibles à l'oeil nu.

Selon la présente description, les premières surfaces élémentaires I₁ ou les deuxièmes surfaces élémentaires I₂ présentent des contours formant, en vue de dessus, des micro-images reconnaissables et identiques, agencées périodiquement selon une deuxième direction et avec une deuxième période p₂.

Ainsi, dans l'exemple de la FIG. 5A, les micro-images, ici des « 6 », sont agencées selon une direction Δ_{I} colinéaire à la direction Δ_{L} des microlentilles L₁ et avec une période p₂ différente de la période p₁ de la matrice de microlentilles ML₁.

Dans l'exemple de la FIG. 5B, les micro-images, dans cet exemple des «R», sont agencées selon une deuxième direction Δ_{I} non colinéaire avec la première direction Δ_{L} des micro lentilles L₁. Un angle φ entre lesdites premières et deuxièmes directions Δ_{L} et Δ_{L} est par exemple compris entre compris entre 0,1 degrés et 5 degrés, avantageusement entre 0,1 degrés et 3 degrés.

D'autres configurations (non représentées sur les figures) sont possibles. Dans tous les cas, la non correspondance de la matrice de microlentilles et de la matrice de micro-images permet de former un composant optique qui présente en réflexion et sous l'effet d'un mouvement de tilt autour d'un axe perpendiculaire à ladite première direction, un grossissement et un déplacement desdites premières micro-images par grossissement de Moiré.

Les FIGS. 4A et 4B sont plus précisément obtenues à partir d'un plan de coupe (plan P) de l'exemple illustré sur la FIG. 5A.

Sur la FIG. 4A, ce sont les premières surfaces élémentaires I₁ nanostructurées de l'interface qui forment le « fond », les deuxièmes surfaces élémentaires I₂ non structurées présentent des contours formant, en vue de dessus, les micro-images « 6 » visibles sur la FIG. 5A. Les premières surfaces élémentaires I₁ et les deuxièmes surfaces élémentaires I₂ suivent le profil d'une matrice ML₁ de microlentilles cylindriques L₁. Ainsi, lors d'un mouvement de tilt autour d'un axe perpendiculaire à la première direction d'agencement des microlentilles ML₁, un observateur pourra observer vue de la première face d'observation 300_{A} une réflexion en provenance des deuxièmes surfaces élémentaires I₂ plus lumineuse contrastant sur un fond produisant un effet de « blanc diffus » ou un effet coloré.

Dans le cas de la FIG. 4B, les deuxièmes surfaces élémentaires I₂ sont également nanostructurées. Lors d'un mouvement de tilt autour d'un axe perpendiculaire à la première direction d'agencement des microlentilles ML₁, les images agrandies par grossissement de Moiré apparaitront contrastées par rapport au fond, soit du fait de couleurs différentes, soit du fait de « blancs diffus » différents.

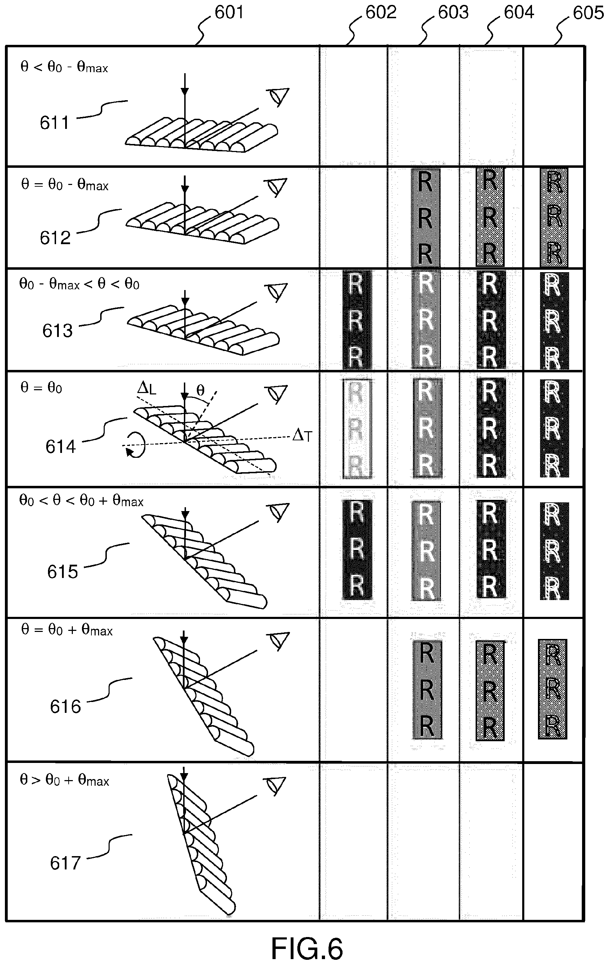

La FIG. 6 illustre par des schémas des effets visuels comparatifs entre un composant optique de sécurité fonctionnant selon le principe de l'état de l'art (colonne 602) et des exemples de composants optiques de sécurité selon la présente description (colonnes 603, 604, 605).

Plus précisément, la colonne 602 représente des effets visuels en fonction de l'angle de tilt pour un composant optique de sécurité du type de celui représenté sur la FIG. 2B mais dans lequel les microlentilles sphériques sont remplacées par des microlentilles cylindriques. La colonne 603 représente des effets visuels en fonction de l'angle de tilt pour un composant optique de sécurité du type de celui représenté sur la FIG. 4A, avec des premières surfaces élémentaires I₁ nanostructurées pour former une nanostructure diffusante et des deuxièmes surfaces élémentaires I₂ non structurées, les premières et deuxièmes surfaces élémentaires suivant le profil d'une matrice ML₁ de microlentilles cylindriques. La colonne 604 représente des effets visuels en fonction de l'angle de tilt pour un composant optique de sécurité également du type de celui représenté sur la FIG. 4A, mais les premières surfaces élémentaires I₁ sont nanostructurées pour former un réseau sub longueur d'onde. La colonne 605 représente des effets visuels en fonction de l'angle de tilt pour un composant optique de sécurité du type de celui représenté sur la FIG. 4B, les premières surfaces élémentaires I₁ et les deuxièmes surfaces élémentaires I₂ étant nanostructurées pour former respectivement un premier réseau sub longueur d'onde et un deuxième réseau sub longueur d'onde, différents l'un de l'autre.

On suppose dans cet exemple que les microlentilles cylindriques du composant choisi pour illustrer les effets visuels selon l'état de l'art dans la colonne 602 sont identiques aux premières lentilles cylindriques du composant choisi dans les colonnes 603, 604, 605. La colonne 601 sur la FIG. 6 représente de façon schématisé un composant optique de sécurité dans différentes positions de tilt (lignes 611 à 617), c'est-à-dire pour différents angles de rotation du composant autour d'un axe Δ_{T}, perpendiculaire à la direction Δ_{L} des microlentilles cylindriques ou parallèle à la génératrice des cylindres formant microlentilles cylindriques.

La ligne 614 correspond à une position nominale d'observation, définie dans cet exemple pour une observation sous éclairage vertical (symbolisé par une flèche vers le bas sur les figures), et pour un composant incliné de telle sorte que l'observation (symbolisée par un œil d'un observateur) se fasse en réflexion spéculaire. On peut définir un angle de tilt θ entre la direction d'éclairage (verticale dans cet exemple) et la normale au composant. Dans la position nominale d'observation (ligne 614), l'angle de tilt vaut alors θ = θ₀.

Dans le cas d'un composant optique de sécurité fonctionnant selon le principe de l'état de l'art (colonne 602), lors de la réflexion spéculaire (ligne 614), le fond qui forme un miroir renvoie un maximum de lumière incidente vers l'observateur (fond « blanc »). Les microlentilles cylindriques structurées avec les micro-images (ici en forme de R) renvoient aussi un maximum de lumière du fait que la lentille est assimilable sur le dessus à une surface plane. Le contraste est donc quasiment nul à la réflexion spéculaire. Quand on s'éloigne de la réflexion spéculaire, le fond devient immédiatement «noir»; par contre, les images agrandies par grossissement de Moiré gardent une bonne luminosité pour l'observateur, du moins dans une gamme d'anges de tilt θ tel que θ₀ - θₘₐₓ < θ < θ₀ (ligne 613) et tel que θ₀ < θ < θ₀ + θₘₐₓ (ligne 615), où θₘₐₓ est l'angle au-delà duquel la réflexion par les microlentilles cylindriques n'est plus visible par l'observateur. L'angle θₘₐₓ dépend de la courbure des microlentilles cylindriques et des conditions d'observation dans la position nominale d'observation. La déposante a constaté ainsi qu'il y a une rupture forte de contraste entre la réflexion spéculaire (contraste quasiment nul) et de part et d'autre de la réflexion spéculaire (contraste très fort), pour des angles de tilt compris dans une gamme d'angles donnée définie par θₘₐₓ.

Dans le premier exemple d'un composant optique de sécurité selon la présente description fonctionnant selon le principe de la FIG. 4A (colonne 603), lors de la réflexion spéculaire (ligne 614), à la fois le « fond » défini ici par les premières surfaces élémentaires (I₁, FIG. 4A) et les micro-images définies par les deuxièmes surfaces élémentaires (I₂, FIG. 4A) apparaissent lumineuses pour l'observateur. Cependant, la luminosité apparente des images est plus grande que celle du fond, du fait de la nano structuration des premières surfaces élémentaires. Un observateur voit donc les images agrandies très lumineuses sur fond de blanc diffus sur toute une gamme d'angles définie par θ₀ - θₘₐₓ < θ < θ₀ + θₘₐₓ (lignes 613, 614, 615). Pour des angles de tilt égaux à θ₀ + θₘₐₓ ou θ₀ - θₘₐₓ (lignes 612, 616), la réflexion par les deuxièmes surfaces élémentaires n'est plus visible. Les images deviennent noires tandis que le « fond » reste lumineux du fait de la diffusion, puis s'éteint également (lignes 611, 617).

Ainsi, avec un composant optique de sécurité selon la présente description, l'effet de mouvement des images agrandies est ininterrompu, c'est-à-dire sans « accident » de contraste à la réflexion spéculaire, cet effet résultant de la nano structuration des premières surfaces élémentaires.

Par exemple, on pourra chercher un angle de tilt maximal θₘₐₓ typiquement de +/-45°, de préférence +/- 30° de la position nominale d'observation θ₀.

Ce même effet est observé avec un composant optique de sécurité qui présente une nano-structuration des premières surfaces élémentaires de type réseau, et plus précisément dans cet exemple, un réseau sub longueur d'onde (voir colonne 604). Dans cet exemple cependant, un observateur pourra voir les images très lumineuses sur fond coloré sur toute une gamme d'angles définie par θ₀ - θₘₐₓ < θ < θ₀ + θₘₐₓ (lignes 613, 614, 615). Pour des angles de tilt égaux à θ₀ + θₘₐₓ ou θ₀ - θₘₐₓ (lignes 612, 616), les images deviennent noires tandis que le « fond » reste coloré du fait des ordres secondaires de la diffraction, puis s'éteint également (lignes 611, 617).

Dans l'exemple d'un composant optique de sécurité selon la présente description fonctionnant selon le principe de la FIG. 4B (colonne 605), lors de la réflexion spéculaire (ligne 614), à la fois le « fond » défini ici par les premières surfaces élémentaires (I₁, FIG. 4B) et les images définies par les deuxièmes surfaces élémentaires (I₂, FIG. 4B) apparaissent colorées pour l'observateur. Cependant, la couleur des images est différente de celle du fond, du fait de la nano structuration différente des premières et deuxièmes surfaces élémentaires. Un observateur voit donc des images colorées d'une certaine couleur sur fond coloré d'une autre couleur sur toute une gamme d'angles définie par θ₀ - θₘₐₓ < θ < θ₀ + θₘₐₓ (lignes 613, 614, 615). Pour des angles de tilt égaux à θ₀ + θₘₐₓ ou θ₀ - θₘₐₓ (lignes 612, 616), les couleurs à la fois des images et du fond changent, du fait des ordres secondaires de la diffraction, puis s'éteignent également (lignes 611, 617).

Un procédé de fabrication de composants optiques de sécurité selon la présente description comprend avantageusement les étapes suivantes.

La première structure optique pour former l'interface structurée du composant optique de sécurité selon la présente description peut être enregistrée par photolithographie sur un support photosensible (ou « photoresist » selon l'expression anglo-saxonne), ou par lithographie par faisceau d'électrons. Une étape de galvanoplastie permet de reporter la structure optique dans un matériau résistant par exemple à base de Nickel pour réaliser une matrice ou « master » métallique comportant la structure optique. La fabrication du composant optique de sécurité comprend alors une étape de réplication. Par exemple la réplication peut être réalisée par estampage (par pressage à chaud du matériau diélectrique en anglais «hot embossing ») de la première couche 313 (FIGS. 3A, 3B) en matériau diélectrique d'indice de réfraction n₁, par exemple une couche de bas indice, typiquement un vernis d'estampage de quelques microns d'épaisseur. La couche 313 est avantageusement portée par le film support 311, par exemple un film de 10 µm à 100 µm en matériau polymère, par exemple en PET (polyéthylène téréphtalate). La réplication (mode préféré) peut également être faite par moulage de la couche de vernis d'estampage avant séchage puis réticulation UV (« UV casting »). La réplication par casting permet notamment de reproduire des structures présentant une grande amplitude de profondeur et permet d'obtenir une meilleure fidélité dans la réplication. De manière générale, toute autre méthode de réplication de haute résolution connue de l'art antérieur peut être utilisée dans l'étape de réplication. Vient ensuite le dépôt sur la couche ainsi embossée de l'ensemble des autres couches, notamment la couche réfléchissante 314, la couche d'encapsulation 315 (optionnelle), la couche de contraste colorée opaque 316 (optionnelle) qui peut être déposée uniformément ou imprimée pour figurer un nouveau motif et la couche de type colle ou vernis (317, 318) par un procédé d'enduction ou un vernis réticulable sous UV, par exemple.

Bien que décrit à travers un certain nombre d'exemples de réalisation, le composant optique de sécurité selon l'invention et le procédé de fabrication dudit composant comprennent différentes variantes, modifications et perfectionnements qui apparaîtront de façon évidente à l'homme de l'art, étant entendu que ces différentes variantes, modifications et perfectionnements font partie de la portée de l'invention telle que définie par les revendications qui suivent.

## Revendications

1. Composant optique de sécurité destiné à être observé en réflexion, à l'œil nu, selon au moins une première face d'observation (300A), comprenant :
- une première couche (313) en matériau diélectrique, au moins partiellement transparente dans le visible, présentant un premier indice de réfraction (n₁),
- une deuxième couche réflective (314) formant une interface réflective avec ladite première couche dans au moins une première région,
dans lequel :
- ladite interface réflective comprend au moins une première structure optique avec des premières surfaces élémentaires (I₁) et des deuxièmes surfaces élémentaires (I₂), les contours desdites premières et deuxièmes surfaces élémentaires étant complémentaires en vue de dessus,
- les premières surfaces élémentaires (I₁) sont nanostructurées de telle sorte à former au moins une première nanostructure, ladite première nanostructure étant diffusante ou formant un premier réseau mono ou bidimensionnel ;
- les deuxièmes surfaces élémentaires (I₂) ne sont pas nanostructurées ou sont nanostructurées de telle sorte à former au moins une deuxième nanostructure, différente de ladite première nanostructure, ladite deuxième nanostructure étant diffusante ou formant un deuxième réseau mono ou bidimensionnel ;
- les premières surfaces élémentaires (I₁) et les deuxièmes surfaces élémentaires (I₂) suivent le profil d'une matrice (ML₁) à une dimension de microlentilles cylindriques identiques entre elles (L₁), agencées périodiquement selon une première direction (Δ_{L}), avec une première période (p₁);
- lesdites premières surfaces élémentaires (I₁) ou lesdites deuxièmes surfaces élémentaires (I₂) présentent des contours formant, en vue de dessus, des micro-images (MI) reconnaissables et identiques, agencées périodiquement selon une deuxième direction et avec une deuxième période, le composant optique présentant en réflexion et sous l'effet d'un mouvement de tilt autour d'un axe perpendiculaire à ladite première direction, un grossissement et un déplacement desdites premières micro-images par grossissement de Moiré.

2. Composant optique selon la revendication 1, dans lequel lesdites premières surfaces élémentaires (I₁) sont nanostructurées de telle sorte à former au moins un premier réseau mono ou bidimensionnel, de période comprise entre 100 nm et 700 nm, déterminé pour produire, après dépôt de la deuxième couche réflective (314), un filtre résonant dans au moins une première bande spectrale.

3. Composant optique selon l'une quelconque des revendications précédentes, dans lequel lesdites deuxièmes surfaces élémentaires (I₂) sont nanostructurées de telle sorte à former un deuxième réseau mono ou bidimensionnel.

4. Composant optique selon la revendication 3, dans lequel ledit deuxième réseau présente une période comprise entre 100 nm et 700 nm et est déterminé pour produire, après dépôt de la deuxième couche réflective (314), un filtre résonant dans au moins une première bande spectrale.

5. Composant optique selon l'une quelconque des revendications 1 à 2, dans lequel lesdites deuxièmes surfaces élémentaires (I₂) sont nanostructurées de telle sorte à former une deuxième nanostructure diffusante.

6. Composant optique selon l'une quelconque des revendications précédentes, dans lequel ladite deuxième couche réflective (314) est une couche métallique.

7. Composant optique selon l'une quelconque des revendications 1 à 5, dans lequel ladite deuxième couche réflective (314) est une couche en matériau diélectrique, présentant un indice de réfraction différent de celui des couches avoisinantes.

8. Composant optique selon l'une quelconque des revendications précédentes, présentant en outre une troisième couche d'encapsulation en matériau diélectrique (315), ladite deuxième couche réflective étant encapsulée entre lesdites première et troisième couches.

9. Composant optique selon l'une quelconque des revendications précédentes, dans lequel une largeur maximale desdites microlentilles cylindriques, mesurée selon ladite première direction d'agencement, est inférieure à 300 µm.

10. Composant optique selon l'une quelconque des revendications précédentes, dans lequel une longueur minimale desdites microlentilles cylindriques, mesurée dans une direction perpendiculaire à ladite première direction d'agencement, est supérieure à 1 mm.

11. Composant optique selon l'une quelconque des revendications précédentes, dans lequel une largeur minimale de ladite première structure, mesurée selon ladite première direction d'agencement, est supérieure à 1 mm.

12. Composant optique selon l'une quelconque des revendications précédentes, dans lequel une hauteur (h_{S}) de ladite première structure, mesurée dans une direction perpendiculaire au plan du composant, est comprise entre 2 µm et 20 µm.

13. Composant optique de sécurité selon l'une quelconque des revendications précédentes, dans lequel lesdites première et deuxième directions sont colinéaires et lesdites première et deuxième périodes sont différentes.

14. Composant optique de sécurité selon l'une quelconque des revendications 1 à 12, dans lequel ladite deuxième direction présente un angle non nul avec ladite première direction.

15. Composant optique de sécurité selon l'une quelconque des revendications précédentes, observable selon une deuxième face d'observation, opposée à ladite première face d'observation (300A).

16. Procédé de fabrication d'un composant optique de sécurité selon l'une quelconque des revendications précédentes, le procédé comprenant :
- le dépôt sur un film support (311) de ladite première couche en matériau diélectrique (313) ;
- la formation par réplication sur ladite première couche de ladite au moins première structure ;
- le dépôt sur ladite première couche en matériau diélectrique (313) structurée d'une couche réflective (314) pour former ladite interface réflective.

## Patentansprüche

1. Optische Sicherheitskomponente, die dazu bestimmt ist, mit bloßem Auge auf mindestens einer ersten Beobachtungsfläche (300A) in Reflexion beobachtet zu werden, umfassend:
- eine erste Schicht (313) aus dielektrischem Material mit einem ersten Brechungsindex (n₁), die im sichtbaren Bereich zumindest teilweise transparent ist,
- eine zweite reflektierende Schicht (314), die mit der ersten Schicht in mindestens einem ersten Bereich eine reflektierende Grenzfläche bildet,
wobei:
- die reflektierende Grenzfläche mindestens eine erste optische Struktur mit ersten Elementarflächen (I₁) und zweiten Elementarflächen (I₂) umfasst, wobei die Konturen der ersten und zweiten Elementarflächen in der Draufsicht komplementär sind,
- die ersten Elementarflächen (I₁) derart nanostrukturiert sind, dass mindestens eine erste Nanostruktur gebildet ist, wobei die erste Nanostruktur streuend ist oder ein erstes ein- oder zweidimensionales Gitter bildet;
- die zweiten Elementarflächen (I₂) nicht nanostrukturiert sind oder derart nanostrukturiert sind, dass mindestens eine zweite Nanostruktur gebildet ist, die sich von der ersten Nanostruktur unterscheidet, wobei die zweite Nanostruktur streuend ist oder ein zweites ein- oder zweidimensionales Gitter bildet;
- die ersten Elementarflächen (I₁) und die zweiten Elementarflächen (I₂) dem Profil einer eindimensionalen Matrix (ML₁) aus identischen zylindrischen Mikrolinsen (L₁) folgen, die in einer ersten Richtung (Δ_{L}) mit einer ersten Periode (pi) periodisch angeordnet sind;
- die ersten Elementarflächen (I₁) oder die zweiten Elementarflächen (I₂) Konturen haben, die in Draufsicht erkennbare gleiche Mikrobilder (MI) bilden, welche in einer zweiten Richtung mit einer zweiten Periode periodisch angeordnet sind, wobei die optische Komponente in Reflexion unter der Wirkung einer Kippbewegung um eine Achse senkrecht zu der ersten Richtung eine Vergrößerung und eine Verschiebung der ersten Mikrobilder um eine Moire-Vergrößerung bewirkt.

2. Optische Komponente nach Anspruch 1, wobei die ersten Elementarflächen (I₁) derart nanostrukturiert sind, dass mindestens ein erstes ein- oder zweidimensionales Gitter mit einer Periode zwischen 100 nm und 700 nm gebildet ist, welches geeignet ist, nach der Abscheidung der zweiten reflektierenden Schicht (314) einen Resonanzfilter in mindestens einem ersten Spektralband zu erzeugen.

3. Optische Komponente nach einem der vorhergehenden Ansprüche, wobei die zweiten Elementarflächen (I₂) derart nanostrukturiert sind, dass ein zweites ein- oder zweidimensionales Gitter gebildet ist.

4. Optische Komponente nach Anspruch 3, wobei das zweite Gitter eine Periode zwischen 100 nm und 700 nm aufweist und geeignet ist, nach der Abscheidung der zweiten reflektierenden Schicht (314) einen Resonanzfilter in mindestens einem ersten Spektralband zu erzeugen.

5. Optische Komponente nach einem der Ansprüche 1 bis 2, wobei die zweiten Elementarflächen (I₂) derart nanostrukturiert sind, dass eine zweite streuende Nanostruktur gebildet ist.

6. Optische Komponente nach einem der vorhergehenden Ansprüche, wobei die zweite reflektierende Schicht (314) eine Metallschicht ist.

7. Optische Komponente nach einem der Ansprüche 1 bis 5, wobei die zweite reflektierende Schicht (314) eine Schicht aus dielektrischem Material mit einem Brechungsindex ist, der sich von dem der benachbarten Schichten unterscheidet.

8. Optische Komponente nach einem der vorhergehenden Ansprüche, welche ferner eine dritte Einkapselungsschicht aus dielektrischem Material (315) umfasst, wobei die zweite reflektierende Schicht zwischen der ersten und der dritten Schicht eingekapselt ist.

9. Optische Komponente nach einem der vorhergehenden Ansprüche, wobei eine maximale Breite der zylindrischen Mikrolinsen, gemessen entlang der ersten Anordnungsrichtung, kleiner als 300 µm ist.

10. Optische Komponente nach einem der vorhergehenden Ansprüche, wobei eine minimale Länge der zylindrischen Mikrolinsen, gemessen in einer Richtung senkrecht zu der ersten Anordnungsrichtung, größer als 1 mm ist.

11. Optische Komponente nach einem der vorhergehenden Ansprüche, wobei eine minimale Breite der ersten Struktur, gemessen entlang der ersten Anordnungsrichtung, größer als 1 mm ist.

12. Optische Komponente nach einem der vorhergehenden Ansprüche, wobei eine Höhe (h_{S}) der ersten Struktur, gemessen in einer Richtung senkrecht zu der Ebene der Komponente, zwischen 2 µm und 20 µm beträgt.

13. Optische Sicherheitskomponente nach einem der vorhergehenden Ansprüche, wobei die erste und die zweite Richtung kollinear sind und die erste und die zweite Periode unterschiedlich sind.

14. Optische Sicherheitskomponente nach einem der Ansprüche 1 bis 12, wobei die zweite Richtung einen von Null verschiedenen Winkel mit der ersten Richtung hat.

15. Optische Sicherheitskomponente nach einem der vorhergehenden Ansprüche, die von einer zweiten Beobachtungsseite beobachtbar ist, welche der ersten Beobachtungsseite (300A) gegenüber liegt.

16. Verfahren zum Herstellen einer optischen Sicherheitskomponente nach einem der vorhergehenden Ansprüche, wobei das Verfahren umfasst:
- die Abscheidung der ersten Schicht aus dielektrischem Material (313) auf einem Trägerfilm (311);
- die Bildung der mindestens ersten Struktur durch Replikation auf der ersten Schicht;
- die Abscheidung einer reflektierenden Schicht (314) auf der strukturierten ersten Schicht aus dielektrischem Material (313), um die reflektierende Grenzfläche zu bilden.

## Claims

1. An optical safety component intended to be observed in reflection, with the naked eye, according to at least a first observation face (300A), comprising:
- a first layer (313) of dielectric material, at least partially transparent in the visible, with a first refractive index (n₁),
- a second reflective layer (314) forming a reflective interface with said first layer in at least a first region,
in which:
- said reflective interface comprises at least a first optical structure with first elementary surfaces (I₁) and second elementary surfaces (I₂), the contours of said first and second elementary surfaces being complementary in plan view,
- the first elementary surfaces (I₁) are nanostructured so as to form at least a first nanostructure, said first nanostructure being scattering or forming a first one- or two-dimensional grating;
- the second elementary surfaces (I₂) are not nanostructured or are nanostructured in such a way as to form at least a second nanostructure, different from said first nanostructure, said second nanostructure being scattering or forming a second one- or two-dimensional grating;
- the first elementary surfaces (I₁) and the second elementary surfaces (I₂) follow the profile of a one-dimensional matrix (ML₁) of mutually identical cylindrical microlenses (L₁), arranged periodically in a first direction (ΔL), with a first period (p₁);
- said first elementary surfaces (I₁) or said second elementary surfaces (I₂) have contours forming, in plan view, recognizable and identical micro-images (MI), arranged periodically along a second direction and with a second period, the optical component exhibiting in reflection and under the effect of a tilt movement about an axis perpendicular to said first direction, a magnification and a displacement of said first micro-images by Moire magnification.

2. The optical component according to claim 1, wherein said first elementary surfaces (I₁) are nanostructured so as to form at least a first one- or two-dimensional grating, with a period of between 100 nm and 700 nm, determined to produce, after deposition of the second reflective layer (314), a resonant filter in at least a first spectral band.

3. The optical component according to any one of the preceding claims, wherein said second elementary surfaces (I₂) are nanostructured so as to form a second one- or two-dimensional grating.

4. The optical component of claim 3, wherein said second grating has a period between 100 nm and 700 nm and is determined to produce, after deposition of the second reflective layer (314), a resonant filter in at least a first spectral band.

5. The optical component according to any one of claims 1 to 2, wherein said second elementary surfaces (I₂) are nanostructured so as to form a second scattering nanostructure.

6. The optical component according to any of the preceding claims, wherein said second reflective layer (314) is a metal layer.

7. The optical component according to any one of claims 1 to 5, wherein said second reflective layer (314) is a layer of dielectric material, having a different refractive index than the surrounding layers.

8. The optical component according to any of the preceding claims, further having a third encapsulating layer of dielectric material (315), said second reflective layer being encapsulated between said first and third layers.

9. The optical component according to any one of the preceding claims, wherein a maximum width of said cylindrical microlenses, measured along said first arrangement direction, is less than 300 µm.

10. The optical component according to any one of the preceding claims, wherein a minimum length of said cylindrical microlenses, measured in a direction perpendicular to said first arrangement direction, is greater than 1 mm.

11. The optical component according to any of the preceding claims, wherein a minimum width of said first structure, measured along said first direction of arrangement, is greater than 1 mm.

12. The optical component according to any one of the preceding claims, wherein a height (hₛ) of said first structure, measured in a direction perpendicular to the plane of the component, is between 2 µm and 20 µm.

13. The optical component according to any one of the preceding claims, wherein said first and second directions are collinear and said first and second periods are different.

14. The optical component of any one of claims 1 to 12, wherein said second direction has a non-zero angle with said first direction.

15. The optical component according to any one of the preceding claims, observable from a second observation face, opposite said first observation face (300A).

16. A method of manufacturing an optical security component according to any of the preceding claims, the method comprising:
- depositing, on a carrier film (311), said first layer of dielectric material (313);
- forming by replication, on said first layer, said at least first structure;
- depositing, on said first structured dielectric material layer (313), a reflective layer (314) to form said reflective interface.
